# EUROPÄISCHE PATENTSCHRIFT

(11) **EP 2 664 656 B1**
(45) Veröffentlichungstag und Bekanntmachung des Hinweises auf die Patenterteilung: **08.07.2015**
(21) Anmeldenummer: 13154267.2
(22) Anmeldetag: 06.02.2013
(51) Int. Cl.: C09C 1/28, C09C 1/36

(54) **Weißpigmentkomposit**
White pigment composite
Composite à pigment blanc

(30) Priorität: 14.05.2012 AT 5702012
(43) Veröffentlichungstag der Anmeldung: 20.11.2013
(73) Patentinhaber: Paltentaler Minerals GmbH & Co KG, 8903 Lassing bei Selzthal (AT)
(72) Erfinder: Römer, Andreas, 2620 Hafning (AT)
(74) Vertreter: Burger, Hannes

(56) Entgegenhaltungen:
- DE-A1- 2 513 483
- DE-A1-102008 046 856
- FR-A1- 2 575 170

## Beschreibung

Die Erfindung betrifft ein Verfahren zur Herstellung eines auf Titandioxid basierenden Weißpigmentkomposits entsprechend dem Oberbegriff des Anspruches 1, sowie ein Weißpigmentkomposit entsprechend dem Oberbegriff des Anspruches 3.

Der Einsatz von Titandioxid als Weißpigment ist im Stand der Technik für unterschiedlichste Anwendungen und Formulierungen weit verbreitet. Im Vergleich zu anderen Weißpigmenten weist Titandioxid den höchsten Brechungsindex auf. Daraus ergeben sich - wie dies an sich bekannt ist - unter anderem deutliche Vorteile in Hinblick auf den Weißgrad, die UV-Beständigkeit und die Deckkraft in daraus hergestellten Formulierungen, wie z.B. hergestellten Farben, etc.. Titandioxid ist aufgrund des weltweit hohen Bedarfs und der nur begrenzten Rohstoffvorkommen sehr teuer und beeinflusst damit erheblich die damit hergestellten Formulierungen. Des Weiteren weist Titandioxid aufgrund seines spezifischen Herstellungsprozesses eine sehr hohe CO₂-Bilan auf. Aus diesem Grund gibt es Ansätze den Anteil an Titandioxid durch den Zusatz von so genannten Extendern, wie z.B. Carbonaten, Quarzen und Silikaten, zu reduzieren. Damit verbunden ist aber häufig eine Reduktion der Qualität der Formulierung. Aus diesem Grund wurden im Stand der Technik bereits unterschiedlichste Verfahren zur Vermeidung des Qualitätsverlustes beschrieben.

Beispielsweise offenbart die WO 2011/134907 A1 eine Farbzusammensetzung mit reduziertem Titandioxidgehalt, die eine gute Opazität und eine gute Nassabriebbeständigkeit aufweist. Dazu weist die Farbe unter anderem als opakisierende Pigmente TiO₂ und polymere Hohlpartikel auf. Als nicht opakisierende Extender sind Dolomit oder Kalk oder Nephelin Syenit oder Kaolin enthalten.

Gemäß der WO 97/32934 A1 wird versucht die Pigmentpartikel beabstandet zueinander einzusetzen. Dazu wird auf der Oberfläche der Titanoxidpartikel ein Niederschlag aus Kalziumkarbonat erzeugt, wobei die Karbonatteilchen eine Teilchengröße von im Wesentlichen 30 nm bis 100 nm aufweisen.

Nach der WO 2007/104465 A2 wird auf den Titanoxidpartikeln eine Beschichtung enthaltend Aluminiumphosphat, Aluminiumoxid und Hohlkörper ausgebildet.

Aus der WO 2008/137175 A2 ist ein Weißpigment unter anderem auf Basis von Titandioxid bekannt, in dem auch Talkum als Extender bzw. Substrat eingesetzt werden kann. Dabei sind entweder die Titandioxidpartikel oder die Talkumpartikel mit einem oberflächenaktiven Reagens beschichtet um die Bindung zwischen den Titandioxid- und den Talkumpartikeln zu verbessern.

Die DE 25 13 483 A1 beschreibt ein Gemisch aus Titandioxidteilchen und Extender-Pigmentteilchen, wobei der Anteil der Titandioxidteilchen etwa 4 bis etwa 80 Gew.-% des Gemisches ausmacht, die Gestalt der Teilchen in dem Gemisch charakteristisch für die Gestalt ist, welche durch ein Flüssigkeitsenergie- oder Düsenvermahlen gebildet wird, und wobei das Gemisch nicht mehr als etwa 5 Gew.-% Teilchen, welche grösser als etwa 5 µm sind, enthält.

Die FR 2 575 170 A1 beschreibt eine Pigmentmischung die durch gemeinsames Vermahlen von Titandioxid und Talkum hergestellt wird, um damit frische Talkumoberflächen während des Vermahlens zu schaffen, an denen die Titandioxidteilchen besser adsorbiert werden.

Die Aufgabe der vorliegenden Erfindung besteht darin, ein Weißpigmentkomposit herzustellen, das zumindest annähernd die gleichen Eigenschaften wie Titandioxid in Hinblick auf seine Verwendung als Pigment aufweist.

Diese Aufgabe wird jeweils unabhängig durch das eingangs genannte Verfahren zur Herstellung eines Weißpigmentkomposits sowie durch das Weißpigmentkomposit selbst gelöst, wobei nach dem Verfahren die Titandioxidteilchen und die Pigmentersatzstoffteilchen vor der physisorptiven Verbindung miteinander in einem gesonderten Verfahrensschritt auf eine Teilchengröße zerkleinert werden, die um maximal 10 % größer ist, als die jeweilige endgültige Teilchengröße nach der physisorptiven Verbindung beträgt und danach die Titandioxidteilchen mit den Pigmentersatzstoffteilchen physisorptiv und dauerhaft durch mechanische Befestigung der Titandioxidteilchen mit den Pigmentersatzstoffteilchen verbunden werden, wobei die physisorptive Verbindung des Titandioxids mit dem Pigmentersatzstoff durch Einpressen und/oder Einwalzen und/oder Eindrücken der Teilchen des Titandioxids in die Teilchen des Pigmentersatzstoffes hergestellt wird und dazu Titandioxidteilchen eingesetzt werden, die kleiner sind als die Pigmentersatzstoffteilchen, und für das Einpressen, Eindrücken bzw. Einwalzen der Teilchen des Titandioxids in die Teilchen des Pigmentersatzstoffes eine Mühle mit einer Beanspruchungsgeschwindigkeit der Teilchen von maximal 10 m/s betrieben wird. Bei dem eingangs genannten Weißpigmentkomposit ist vorgesehen, dass die Titandioxidteilchen mit den Pigmentersatzstoffteilchen physisorptiv durch mechanische Befestigung durch Einpressen und/oder Einwalzen und/oder Eindrücken der Titandioxidteilchen mit den Pigmentersatzstoffteilchen verbunden sind, wobei die Titandioxidteilchen kleiner sind als die Pigmentersatzstoffteilchen.

Unter dem Begriff Physisorption wird eine Anbindung der Titandioxidteilchen an die Oberfläche der Pigmentersatzstoffteilchen durch physikalische Kräfte verstanden. Es besteht also keine chemische Verbindung zwischen den Titandioxidteilchen und den Pigmentersatzstoffteichen.

Von Vorteil ist dabei, dass die Teilchen des Titandioxids und des Pigmentersatzstoffes an sich - abgesehen von der dauerhaften Verbindung miteinander - eine geringe Veränderung erfahren, also insbesondere keine chemische Veränderung der Oberfläche erfolgt. Es werden damit die optischen Qualitäten des Titandioxids nicht bzw. nicht wesentlich verändert. Es ist weiter von Vorteil, dass mit diesem Weißpigmentkomposit keine bzw. keine wesentlichen Systemanpassungen im Einsatz in diversen Anwendungen, wie beispielsweise der Lack- und Farbenindustrie oder der Kunststoffindustrie, erforderlich sind, selbst wenn das Titandioxid in einem größeren Anteil durch den Pigmentersatzstoff ersetzt wird. Normalerweise beeinflusst die Zugabe eines Füllstoffes - auch die aus dem Stand der Technik bekannten Extender sind letztendlich Füllstoffe - aufgrund der im Vergleich zu den Titandioxidteilchen größeren bzw. sehr unterschiedlichen Oberfläche eines Füllstoffteilchens unter anderem den Weißgrad, den Glanzgrad, die Viskosität des Systems, etc. Die Folge davon ist, dass es nicht ausreicht nur das Titandioxid mengenmäßig durch den Füllstoff zu ersetzen, sondern dass die gesamte Rezeptur verändert und angepasst werden muss. Bei der Vielzahl an unterschiedlichen Farben bzw. Weißtönen die ein Hersteller normalerweise anbietet - es muss dabei auch beachtet werden, dass Weißpigmente auch mit anderen Pigmenten gemischt werden, um bestimmte Farbtöne zu erreichen - bedeutet der Ersatz des Titandioxids durch einen Füllstoff also einen kostenintensiven Eingriff in die Rezepturen, wodurch der Kostenvorteil durch die reduzierte Menge an Titandioxid zumindest teilweise aufgehoben bzw. zur Gänze neutralisiert wird. Dass heute derartige Titandioxid-Extender-Mischungen trotzdem eingesetzt werden ist u.a. auch darin begründet, dass Titandioxid mengenbezogen nur im beschränktem Umfang erhältlich ist. Mit dem Weißpigmentkomposit wurde hingegen beobachtet, dass sich die Produkteigenschaft wie z.B. Farbmetrik nicht (wesentlich) ändert, sodass also kein aufwändiger Abgleich von Rezepturen erforderlich ist und der gesamte Preisvorteil aufgrund der Mengenreduktion des Titandioxids realisiert werden kann.

Unter dem Begriff "dauerhafte Verbindung" wird verstanden, dass bei normaler Verwendung des Weißpigmentkomposits, also ohne die bewusste Einwirkung von Kräften, die größer sind als jene Kräfte, die in den üblichen Dispergier-Aggregaten zur Herstellung der Endprodukte (z.B. Lacke, Farben, Putze) aus dem Weißpigmentkomposit, auftreten, die Titandioxidteilchen mit den Talkumteilchen verbunden bleiben. Die Verbindung wird also nicht durch das Einmischen des Weißpigmentkomposits in diverse Formulierungen (z.B. Lacke, Farben, Putze) zerstört.

Insbesondere werden die Titandioxidteilchen nicht von den Talkumteilchen durch Scherkräfte abgelöst, die mit Dissolvern auftreten, welche mit einer Umfangsgeschwindigkeit bis zu 30 m/s betrieben werden.

Es sei darüber hinaus darauf hingewiesen, dass im Sinne der Erfindung zumindest annähernd die gesamte Menge der Titandioxidteilchen mit den Talkumteilchen verbunden sind bzw. werden, wobei allerdings eine geringe Menge an nur adsorptiv gebundenen Titandioxidteilchen herstellungsbedingt zulässig ist. Diese adsorptiv gebundenen Titandioxidteilchen sind allerdings nicht dauerhaft mit den Talkumteilchen verbunden, da die zwischen den Teilchen wirkenden Kräfte so gering sind, dass diese adsorptive Anbindung beim Einmischen in eine Formulierung, beispielsweise für eine Farbe oder einen Lack, zerstört wird.

Die physisorptive Verbindung des Titandioxids mit dem Pigmentersatzstoff erfolgt durch Einpressen und/oder Einwalzen und/oder Eindrücken (mechanische Aktivierung, Mechanochemie) der Teilchen des Titandioxids in die Teilchen dieses Pigmentersatzstoffes. Es kann damit die dauerhafte Verbindung der Teilchen miteinander einfach hergestellt bzw. verbessert werden. Damit kann das Weißpigmentkomposit höheren Scherkräften ausgesetzt werden.

Dies ist beispielsweise bei der Einmischung bzw. Einarbeitung des Weißpigmentkomposits in Farben oder Lacke bzw. in Kunststoffe von Vorteil, da der Verbund aus den Teilchen im Wesentlichen erhalten bleibt. Die Konstanz der optischen Eigenschaften des Weißpigmentkomposits kann damit weiter verbessert werden.

Es ist vorgesehen werden, dass für das Einpressen bzw. Einwalzen der der Teilchen des Titandioxids in die Teilchen des Pigmentersatzstoffes eine Vorrichtung mit zumindest annähernd punktförmiger oder linienförmiger Druckbeaufschlagung der Teilchen verwendet wird. Es kann damit der Energieeintrag in die Teilchen während der Verbindungsbildung der Teilchen erhöht werden, wodurch eine weitere Erhöhung der Festigkeit der physisorptiven Verbindung erreicht werden kann.

Der Energieeintrag kann dabei nach der Formel W m_{K}v²_{B}/2 berechnet werden, wobei m_{K} für die Gesamtmasse der Körper steht, mit denen die Teilchen in der Vorrichtung beaufschlagt werden, und v_{B} für die maximale Beanspruchungsgeschwindigkeit steht.

Die Teilchen werden bereits vor deren Verbindung in einem gesonderten Verfahrensschritt auf die gewünschte Teilchengröße zerkleinert, sodass die Titandioxidteilchen und die Pigmentersatzstoffteilchen durch den Energieeintrag während der Verbindungsbildung nur mehr eine Verringerung der Teilchengröße von maximal 10 % erfahren. Die Vermeidung einer weiteren Zerkleinerung bzw. einer wesentlichen weiteren Zerkleinerung der Teilchen während der Verbindungsbildung miteinander hat den Vorteil, dass die Energie, mit der die Teilchen beaufschlagt werden, zumindest Großteils in die Verbindungsbildung selbst umgesetzt wird, wodurch wiederum eine weitere Erhöhung der Verbindungsfestigkeit erreicht werden kann.

Bevorzugt wird die physisorptive Verbindung der Teilchen trocken durchgeführt, wodurch die Teilchen in engeren Kontakt gebracht werden können und damit die Verbindungsbildung rascher erfolgen kann. Die trockene Verfahrensweise hat zudem den Vorteil, dass durch die dabei auftretende Erwärmung der Teilchen die Elektronenbeweglichkeit in den Teilchen erhöht wird. Dies wiederum ist von Vorteil hinsichtlich der zwischen den Teilchen wirkenden physisorptive Bindungskräfte und trägt zu einer weiteren Festigung der Verbindung der Teilchen miteinander bei.

Nach einer Ausführungsvariante des Weißpigmentkomposits ist vorgesehen, dass der Anteil des Pigmentersatzstoffes, bezogen auf die Gesamtmasse des Weißpigmentkomposits, ausgewählt aus einem Bereich mit einer unteren Grenze von 0,5 Gew.-% und einer oberen Grenze von 50 Gew.-% ist. Eine weitere Reduktion unterhalb von 0,5 Gew.-% ist dabei zwar möglich, hat jedoch in Hinblick auf die gewünschte Kostenreduktion des Weißpigments Titandioxid nur einen geringen Effekt. In Bezug auf die obere Grenze wurde jedoch beobachtet, dass es mit einer weiteren Erhöhung des Anteils des Pigmentersatzstoffes in dem Komposit zu einer wesentlichen Veränderung der technischen Eigenschaften der Formulierung kommen kann.

Die eingesetzten Titandioxidteilchen sind kleiner als die Pigmentersatzstoffteilchen. Es wird damit erreicht, dass die Titandioxidteilchen besser in die Oberfläche des Pigmentersatzstoffes eingepresst werden können, wobei auch eine dichtere Belegung der Oberfläche des Pigmentersatzstoffes mit den Titandioxidteilchen erreicht wird. Dies wiederum ist von Vorteil in Hinblick auf die gewünschte Vermeidung der Änderung der optischen Eigenschaften des Weißpigmentkomposits durch die Zugabe des Pigmentersatzstoffes.

Dabei ist es von Vorteil, wenn die Teilchengröße der Titandioxidteilchen maximal 20 % der Teilchengröße der Pigmentersatzstoffteilchen beträgt, wodurch dieser Effekt weiter verbessert werden kann.

Aus demselben Grund ist es weiter bevorzugt, wenn die Pigmentersatzstoffteilchen eine Teilchengröße von maximal 25 µm aufweisen.

Zum besseren Verständnis der Erfindung wird diese anhand der nachfolgenden Figuren näher erläutert.

Es zeigen:
- Fig. 1: ein Röntgendiffraktogramm von Talkum;
- Fig. 2: die REM-Aufnahme des Talkums nach Fig. 1;
- Fig. 3: ein Röntgendiffraktogramm von Titandioxid;
- Fig. 4: die REM-Aufnahme des Talkums nach Fig. 2;
- Fig. 5: ein Röntgendiffraktogramm eines Weißpigmentkomposits aus Titandioxid und Talkum hergestellt unter Verwendung einer Hammermühle;
- Fig. 6: die REM-Aufnahme des Weißpigmentkomposits nach Fig. 5;
- Fig. 7: ein Röntgendiffraktogramm eines Weißpigmentkomposits aus Titandioxid und Talkum hergestellt unter Verwendung einer Schwingscheibenmühle;
- Fig. 8: die REM-Aufnahme des Weißpigmentkomposits nach Fig. 7;
- Fig. 9: ein Röntgendiffraktogramm eines Weißpigmentkomposits aus Titandioxid und Talkum hergestellt unter Verwendung einer Kugelmühle;
- Fig. 10: die REM-Aufnahme des Weißpigmentkomposits nach Fig. 9.

Einführend sei festgehalten, dass die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen sind.

Die Erfindung betrifft ein Verfahren zur Herstellung eines Weißpigmentkomposits. Bei diesem Komposit handelt es sich um eine Kombination aus einem Weißpigment und Talkum. Als Weißpigment wird insbesondere ein Titandioxid, das einen hohen Brechungsindex (2,6-2,8) aufweist, verwendet, wobei Titandioxid in der Anatas- oder Rutilmodifikation vorliegen kann und beide Modifikationen auch oberflächenbehandelt (DIN 55949) sein können. Diesem einen auf Titandioxid basierenden Weißpigmentkomposit wird zumindest ein Pigmentersatzstoff zugesetzt, wobei als Pigmentersatzstoff Talkum aus der Gruppe der Schichtsilikate ausgewählt wird.

Zur Herstellung des Weißpigmentkomposits wird Titandioxid und Talkum als Pigmentersatzstoff verwendet. Neben diesen Inhaltsstoffen sind keine weiteren Inhaltsstoffe enthalten.

Als Titandioxid kann die Rutil- oder die Anatasform verwendet werden. Verwendet werden handelsübliche Formen, die natürlichen oder synthetischen Ursprungs sind. Natürlich vorkommendes Titandioxid wird je nach Eigenfärbung auch entsprechend vorbehandelt werden. Dies ist aus dem Stand der Technik bekannt und soll daher nicht wiederholt werden. Es sei dazu an die einschlägige Literatur verwiesen. Vorzugsweise weist das Titandioxid eine Reinheit von mindestens 80 % auf.

Das Talkum, also der zu vermahlende natürliche Talk weist einen Maximalgehalt an natürlichen Begleitstoffen von maximal 12 Gew.-% auf. Bei diesen Begleitstoffen kann es sich u.a. um Carbonate, Silikate, Chlorit oder Gemische aus diesen handeln. Gegebenenfalls kann der Talk den üblichen Vorbehandlungsverfahren, wie z.B. Reinigungsverfahren (z.B. Flotation), unterzogen werden.

Sowohl das Titandioxid als auch das Talkum werden vor der Verbindung miteinander zerkleinert. Vorzugsweise wird das Titandioxid mit einer Teilchengröße von maximal 5 µm eingesetz.

Das Talkum wird vorzugsweise mit einer Teilchengröße von maximal 50 µm, insbesondere mit einer Teilchengröße von 1 µm bis 30 µm, eingesetzt. Es ist aber auch möglich, insbesondere für spezielle Anwendungen, Teilchengrößen von kleiner 1 µm zu verwenden.

Für die Zerkleinerung bzw. Vermahlung des Titandioxids, falls dieses nicht bereits in der bevorzugten Teilchengröße vorliegt, beispielsweise bei Einsatz eines synthetischen Titandioxids nach dessen Fällung, und des Talks/Talkums werden übliche, aus dem Stand der Technik bekannte Zerkleinerungsvorrichtungen bzw. Mühlen verwendet. Auch hierzu sei an den einschlägigen Stand der Technik verwiesen.

Das Titandioxid und der Pigmentersatzstoff werden also für die Verbindung vor der Verbindung miteinander bereits auf die gewünschte maximale Teilchengröße zerkleinert, wobei in diesem Verfahrensschritt vorgesehen ist, dass diese Teilchengröße um maximal 10 %, insbesondere maximal 5 %, vorzugsweise maximal 2,5 %, größer ist, als die Teilchengröße von Titandioxid und dem Pigmentersatzstoff in dem fertigen Endprodukt, d.h. des Weißpigmentkomposits. Es ist also eine weitere geringfügige Zerkleinerung der Teilchen, bedingt durch die Verfahrensweise nicht ausgeschlossen, wenngleich dies vorzugsweise vermieden wird.

Der Anteil des Pigmentersatzstoffes an der Weißpigmentkomposit kann zwischen 0,5 Gew.-% und 50 Gew.-%, insbesondere zwischen 10 Gew.-% und 50 Gew.-%, vorzugsweise zwischen 35 Gew.-% und 45 Gew.-% betragen. Den Rest bildet das Titandioxid.

Es ist vorgesehen, dass die Titandioxidteilchen physisorptiv mit den Pigmentersatzstoffteilchen verbunden werden. Es wird also kein weiteres Bindemittel eingesetzt, sodass die Weißpigmentkomposit also bindemittelfrei ist. Ebenso wenig werden die Titandioxidteilchen chemisch, d.h. über chemisch reaktive Gruppen bzw. Bindungen, an die Pigmentersatzstoffteilchen angebunden.

Die physisorptive Verbindung der Titandioxidteilchen mit den Teilchen des Pigmentersatzstoffes wird durch das Einpressen bzw. Einwalzen der Titandioxidteilchen in die Oberfläche der Pigmentersatzstoffteilchen unterstützt. Dazu ist es von Vorteil, wenn der Pigmentersatzstoff eine Härte von 1 nach Mohs aufweist.

Unterstützend ist dabei von Vorteil, wenn die Titandioxidteilchen eine obere Teilchengröße aufweisen, die maximal 20 % der Teilchengröße der Pigmentersatzstoffteilchen beträgt, da damit das Einpressen bzw. Einwalzen einfacher und sicherer durchgeführt werden kann.

Nachdem in der bevorzugten Ausführungsvariante Talkum verwendet wird, sind die Pigmentersatzstoffteilchen plättchenförmig ausgebildet. Die Titandioxidteilchen können sich in diesem Fall entweder nur auf einer Seite, d.h. einer Oberfläche oder aber auch an beiden einander gegenüberliegenden Oberflächen der Plättchen anlagern. Insbesondere lagern sich die Titandioxidteilchen homogen (filzartig) auf den Oberflächen des Talkums an. Prinzipiell ist auch eine Anlagerung an den dünnen Bruchkanten denkbar, wenngleich dies wegen der geringen Flächenausdehnung der Bruchkanten der Plättchen nicht so gleichmäßig vorkommt. Es kann also ein Produkt entstehen, bei dem "Lagen" aus den Titandioxidteilchen durch "Lagen" von Pigmentersatzstoffteilchen getrennt sind, bzw. jeweils zwei "Lagen" von Titandioxidteilchen durch Pigementersatzstoffteilchen getrennt sind.

Der Begriff "Lage" ist dabei nicht so zu verstehen, dass in dem Produkt durchgehende Schichten ausgebildet sind, nachdem das Produkt, d.h. die Weißpigementformulierung, partikulär ausgebildet ist.

Zur Herstellung der physisorptiven Verbindung, insbesondere um die Titandioxidteilchen in die Oberfläche der Pigmentersatzstoffteilchen einzupressen, wird eine Vorrichtung verwendet, die die Teilchen einer zumindest annähernd punktförmigen oder linienförmigen Druckbeaufschlagung aussetzt. Es wird damit erreicht, dass auf einer relativ kleinen Fläche ein relativ hoher Druck (hohe Energie) aufgebracht werden kann.

Mit den Begriffen "zumindest annähernd punktförmig" bzw. "zumindest annähernd linienförmig" ist dabei gemeint, dass die Teilchen nicht zwangsweise in genau einem Punkt bzw. genau einer Linie beansprucht werden, wenngleich dies die Idealausführung ist, sondern dass bedingt durch den maschinellen Einsatz die Beanspruchung auch auf einer relativen kleinen Fläche erfolgen kann.

Die Vorrichtung zur Herstellung der physisorptiven Verbindung kann dazu entsprechende Presskörper, wie beispielsweise Kugeln oder Rollen, etc. aufweisen.

Es wird vermutet, dass durch die mechanische Beanspruchung in der Vorrichtung die Talkumteilchen durch das Eindrücken der Titandioxidteilchen plastisch deformiert werden (Formzwang), wodurch an der Oberfläche der Talkumteilchen elektronische Defekte erzeugt werden, sodass in diesen Bereichen auch die nach außen wirkenden Bindungskräfte in diesen deformierten Bereichen beeinflusst werden. Dies wiederum kann dazu verwendet werden, um die Titandioxidteilchen in diesen Bereichen dauerhaft an die Talkumteilchen zu binden. Mit anderen Worten ausgedrückt werden die Talkumteilchen durch die mechanische Beanspruchung "aktiviert". Die Vorrichtung kann daher auch als mechanischer Reaktor bezeichnet werden.

Vorzugsweise werden Vorrichtungen ohne Schlagbeanspruchung der Teilchen für die Anbindung der Titandioxidteilchen an die Talkumteilchen eingesetzt.

Bevorzugte Ausführungsvarianten dieser Vorrichtung sind handelsübliche Mühlenaggregate, wie sie zur Vermahlung von Gesteinen eingesetzt werden. Diese Mühlen werden dabei zweckentfremdet eingesetzt, da in ihnen, wie dies bereits voranstehend ausgeführt wurde, keine wesentliche Zerkleinerung der Teilchen mehr stattfinden soll, bzw. lediglich eine Zerkleinerung in geringem Umfang zugelassen wird. Aus diesem Grund können diese Mühlen ohne die üblicherweise vorhanden Sichter zur Abtrennung der Feinfraktion eingesetzt werden.

Diese Mühlenaggregate werden mit geringen Beanspruchungsgeschwindigkeiten der Teilchen betrieben. Die Beanspruchungsgeschwindigkeit beträgt maximal 10 m/s, vorzugsweise maximal 6 m/s.

Derartige Mühlen sind Scheibenschwingmühlen, Trommelmühlen, Rohrschwingmühlen. Planetenmühlen, Prallmühlen.

Vorzugsweise erfolgt die physisorptive Verbindung trocken, d.h. dass keine Aufschlämmung der eingesetzten Teilchen erfolgt.

Insbesondere wird die physisorptive Verbindung in der voranstehend genannten Vorrichtung in kontinuierlicher Arbeitsweise ausgeführt, wenngleich auch ein diskontinuierlicher Betrieb möglich ist.

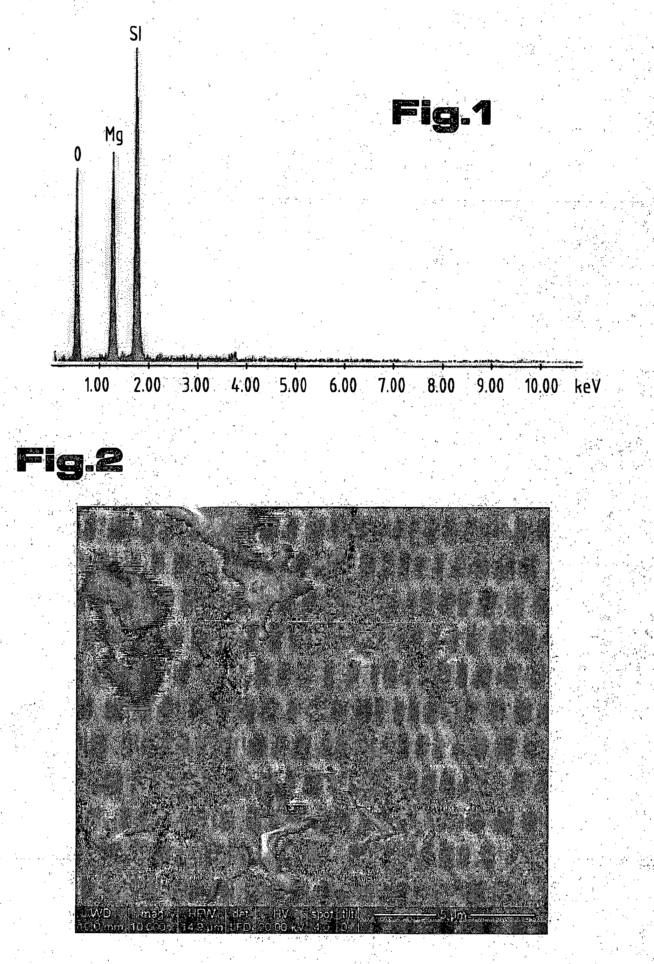

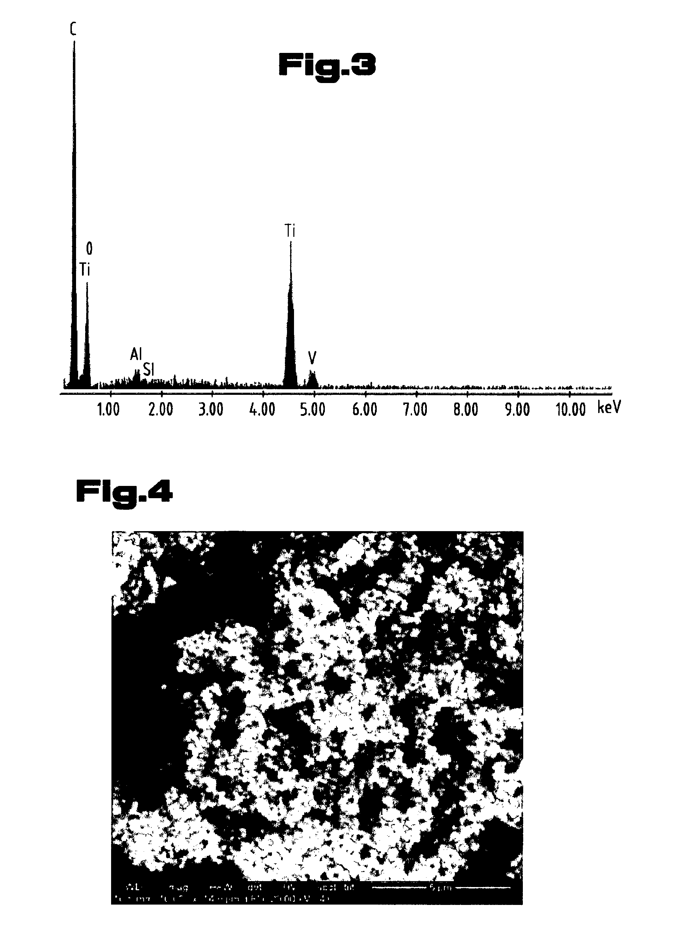

Zur besseren Veranschaulichung der Erfindung sind in den Fig. 1 bis 4 Röntgendiffraktogramme sowie REM-Aufnahmen von Talkum bzw. Titandioxid in 10000-facher Vergrößerung dargestellt. Deutlich erkennbar ist aus den REM-Aufnahmen der plättchenförmige Charakter des Talkums (Fig. 2) bzw. die knollige bzw. annähernd kubische bzw. kugelförmige Gestalt des Titandioxids (Fig. 4). Die beiden Röntgendiffraktogramme belegen, dass es sich um Reinstoffe handelt.

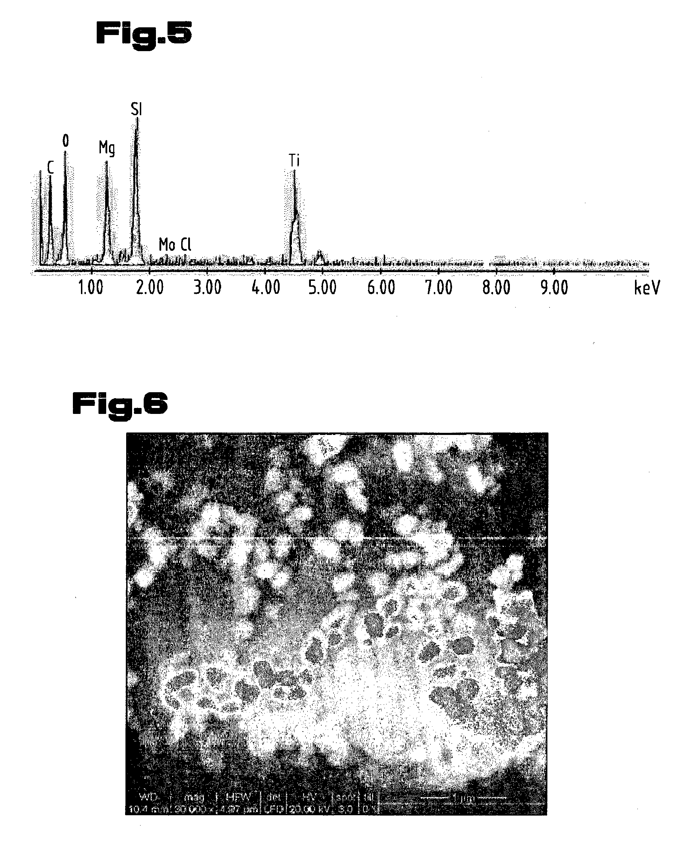

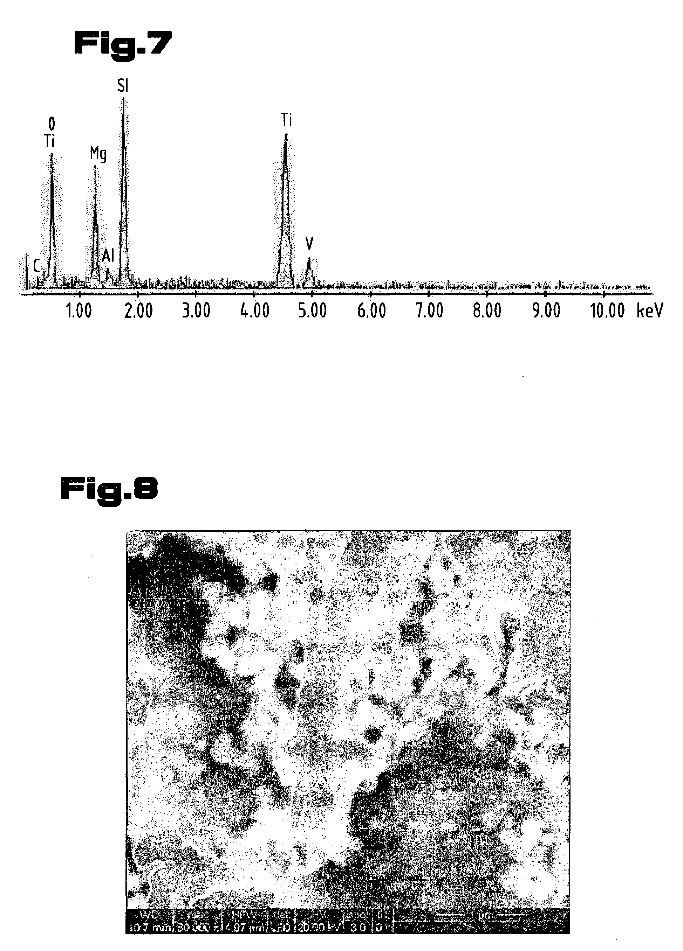

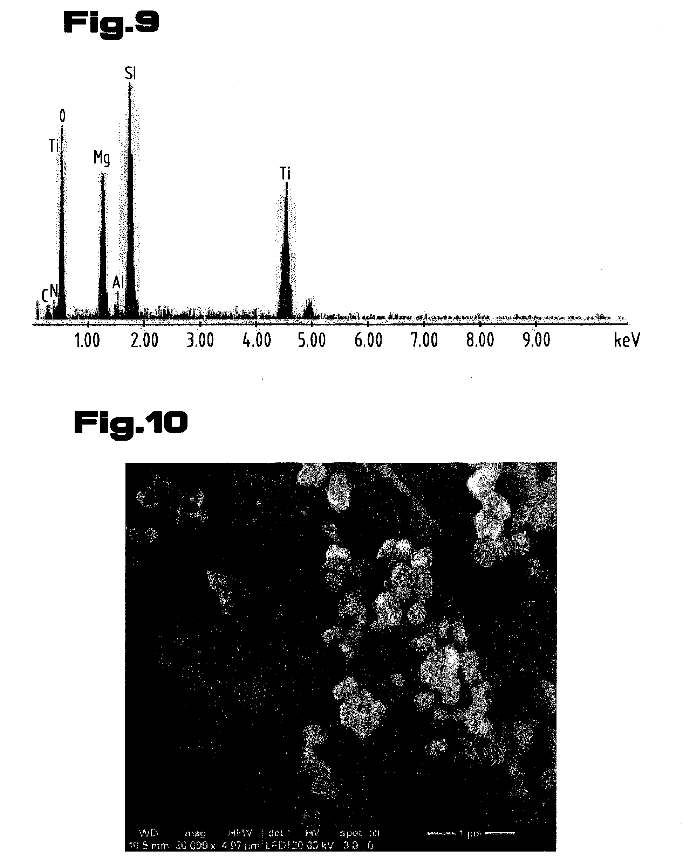

Diese beiden Rohstoffe wurden entsprechend voranstehenden Ausführungen in verschiedenen Mühlen miteinander verbunden. Die Fig. 6 zeigt dabei das Ergebnis unter Verwendung einer Hammermühle, die Fig. 8 das Ergebnis unter Verwendung einer Schwingscheibenmühle und die Fig. 10 das Ergebnis unter Verwendung einer Trommelmühle. Diese Mühlentypen sind prinzipiell aus dem Stand der Technik bekannt, sodass bezüglich ihres Aufbaus auf die einschlägige Literatur verwiesen sei.

Die Fig. 6, 8 und 10 sind jeweils REM-Aufnahmen mit 30000-facher Vergrößerung.

In den Fig. 5, 7 und 9 sind die jeweils zugehörigen Röntgendiffraktogramme dargestellt. Aus einem Vergleich mit den Fig. 1 und 3 ist ersichtlich, dass sich die in den Fig. 6, 8 und 10 dargestellten Weißpigmentkomposite aus Titandioxid und Talkum zusammensetzen. Der Anteil an eingesetztem Talkum betrug dabei 50 Gew.-%.

Aus dem Vergleich der Fig. 6, 8 und 10 ist ersichtlich, dass mit Zunahme der punktförmigen Beanspruchung der Teilchen in der Mühle auch die Flächenbelegung der Talkumteilchen mit den Titandioxidteilchen zunimmt. Während mit einer Hammermühle noch ein Weißpigmentkomposit entsteht, bei dem die Titandioxidteilchen Großteils noch sehr vereinzelt auf der Oberfläche der Talkumteilchen angeordnet sind, entsteht durch die Verwendung der Schwingscheibenmühle und insbesondere der Kugelmühle ein Weißpigmentkomposit, bei dem die Talkumteilchen "rasen- bzw. filzartig" mit den Titandioxidteilchen belegt sind, dies also eine höhere Flächenbeladung an Titandioxid aufweisen, wobei vorzugsweise aber generell keine Titandioxidagglomerate gebildet werden, womit entsprechenden Vorteile realisierbar sind.

Der Vollständigkeit halber sei angemerkt, dass die Zeit der Bearbeitung der Teilchen in den drei Mühlen jeweils gleich lang war.

Zur Evaluierung der Produkteigenschaften des Weißpigmentkomposits wurden folgende Versuche anhand eines Hochglanzlackes auf Acrylbasis durchgeführt.

In Tabelle 1 ist die Grundrezeptur wiedergegeben. Tabelle 2 enthält die Mengenangaben an Titandioxid und dem Weißpigment zu verschiedenen erfindungsgemäßen Proben (HG 1 bis HG 5) sowie Proben mit Weißpigment-Extendern nach dem Stand der Technik (HG 6 bis HG 10). Sämtliche Angaben zur Zusammensetzung in den Tabellen 1 und 2 sind als Gew.-% zu verstehen. Zu Vergleichswecken wurde auch eine Probe hergestellt (HG 0), die weder einen Weißpigment-Extender noch das Weißpigmentkomposit enthielt.

**Tabelle 1**

| **Rohstoffbezeichnung** | **Menge** | **Bemerkung** |
|---|---|---|
| Wasser | 13,60 | |
| Dispergiermittel | 0,30 | z.B. Codis 95 |
| Netzmittel | 0,70 | z.B. BYK 190 |
| Lösungsmittel | 4,00 | z.B. Propylenglycol |
| Filmkonservierungsmittel | 0,30 | z.B. Acticide MBS |
| Acrylatverdicker | 0,60 | z.B. Rheo 2100 |
| PU-Verdicker | 1,40 | z.B. RM 2020 |
| Mineralentschäumer (APEO-frei) | 0,20 | z.B. Sin A |
| Titandioxid | Siehe Tabelle 2 | z.B. RTC90 |
| Extender | Siehe Tabelle 2 | |
| Organisches Bindemittel | 57,00 | z.B. Mowilith |
| Filmbildehilfsmittel | 1,00 | z.B. TPnB |
| Silikonadditiv/Untergrundbenetzung/Slip | 0,50 | z.B. BYK 346 |
| PU-Verdicker | 0,40 | z.B. RM 825 |
| **Summe:** | **80,00** | |

**Tabelle 2:**

| | | |
|---|---|---|
| HG 0 | 20,0 | Titandioxid |
| | 0 | Weißpigmentkomposit |
| HG 1 | 18,00 | Titandioxid |
| | 2,00 | Weißpigmentkomposit |
| HG 2 | 16,00 | Titandioxid |
| | 4,00 | Weißpigmentkomposit |
| HG 3 | 14,00 | Titandioxid |
| | 6,00 | Weißpigmentkomposit |
| HG 4 | 12,00 | Titandioxid |
| | 8,00 | Weißpigmentkomposit |
| HG 5 | 10,00 | Titandioxid |
| | 10,00 | Weißpigmentkomposit |
| HG 6 | 14,00 | Titandioxid |
| | 6,00 | Talkum D98 20µm |
| HG 7 | 14,00 | Titandioxid |
| | 6,00 | Talkum D98 10µm |
| HG 8 | 14,00 | Titandioxid |
| | 6,00 | Talkum D98 3µm |
| HG 9 | 14,00 | Titandioxid |
| | 6,00 | Calcit D98 3µm |
| HG 10 | 14,00 | Titandioxid |
| | 6,00 | Kaolin D98 3µm |

Tabelle 3 gibt die Messwerte für den Glanz, den Weißgrad, die Deckkraft sowie die Viskosität (bei 20 °C) des Hochglanzlackes dieser Proben wieder. Die entsprechenden Messnormen sind ebenfalls in dieser Tabelle angegeben.

**Tabelle 3:**

| | EN DIN ISO 13300 | | | DIN 53214/53229 |
|---|---|---|---|---|
| Rezeptur-Nr.: | Glanz (60°) in % | Weißgrad in % | Deckkraft in % | Viskosität in mPas |
| HG 0 20/0 | 70 | 99,4 | 95 | 18540 |
| HG 1 18/2 | 71 | 99,3 | 94,9 | 18610 |
| HG 2 16/4 | 68 | 99,6 | 94 | 18600 |
| HG 3 14/6 | 64 | 99,2 | 93,5 | 18710 |
| HG 4 12/8 | 57 | 98,7 | 92,3 | 18825 |
| HG 5 10/10 | 44 | 98,2 | 92 | 19010 |
| HG 6 14/6 | 55 | 96,2 | 87 | 21200 |
| HG 7 14/6 | 52 | 97,1 | 88,7 | 21710 |
| HG 8 14/6 | 49 | 97,5 | 89,4 | 24940 |
| HG 9 14/6 | 60 | 97 | 86,7 | 21500 |
| HG 10 14/6 | 51 | 97,4 | 87 | 23640 |

In Tabelle 4 ist die Grundrezeptur wiedergegeben. Tabelle 5 enthält die Mengenangaben an Titandioxid und dem Weißpigment zu verschiedenen erfindungsgemäßen Proben (ID-M 1 bis ID-M 5) sowie Proben mit Weißpigment-Extendern nach dem Stand der Technik (ID-M 6 bis ID-M 10). Sämtliche Angaben zur Zusammensetzung in den Tabellen 1 und 2 sind als Gew.-% zu verstehen. Zu Vergleichswecken wurde auch eine Probe hergestellt (IG-M 0), die weder einen Weißpigment-Extender noch das Weißpigmentkomposit enthielt.

**Tabelle 4:**

| **Rohstoffbezeichnung** | **Menge** | **Bemerkung** |
|---|---|---|
| Wasser | 26,70 | |
| Dispergiermittel | 0,10 | z.B. Calgon N |
| Netzmittel | 0,30 | z.B. Nuosperse FX605 |
| Methylcellulose 30000mPas | 0,30 | z.B. Bermocoll 481FQ |
| Mineralentschäumer (APEO-frei) | 0,20 | z.B. Dapro DF7010 |
| Topfkonservierungsmittel | 0,10 | z.B. Proxel BN |
| PH-Einstellung | 0,10 | z.B. NaOH 10%ig |
| Titandioxid | Siehe Tabelle 5 | z.B. 2190 |
| Komposit bzw. Extender | Siehe Tabelle 5 | |
| Organisches Bindemittel | 10,00 | z.B. Mowilith LDM1871 |
| Talk gesichtet | 5,00 | z.B. intalc 6020LA |
| Dolomit 20µm | 29,00 | z.B. indolo 20 |
| Dolomit 12µm | 18,00 | z.B. indolo 12 |
| PU-Verdicker | 0,20 | z.B. RM 825 |
| Summe: | 90,00 | |

**Tabelle 5:**

| | | |
|---|---|---|
| ID- M 0 | 10,00 | Titandioxid |
| ID-M 1 | 8,00 | Titandioxid |
| | 2,00 | Weißpigmentkomposit |
| ID-M 2 | 6,00 | Titandioxid |
| | 4,00 | Weißpigmentkomposit |
| ID-M3 | 5,00 | Titandioxid |
| | 5,00 | Weißpigmentkomposit |
| ID-M 4 | 2,00 | Titandioxid |
| | 8,00 | Weißpigmentkomposit |
| ID-M 6 | 5,00 | Titandioxid |
| | 5,00 | Talkum D98 20µm |
| ID-M 7 | 5,00 | Titandioxid |
| | 5,00 | Talkum D98 10µm |
| ID-M 8 | 5,00 | Titandioxid |
| | 5,00 | Talkum D98 3µm |
| ID-M 9 | 5,00 | Titandioxid |
| | 5,00 | Calcit D98 3µm |
| ID-M 10 | 5,00 | Titandioxid |
| | 5,00 | Kaolin D98 3µm |

Tabelle 6 gibt die Messwerte für den Glanz, den Weißgrad, die Deckkraft sowie die Viskosität (bei 20 °C) des Hochglanzlackes dieser Proben wieder. Die entsprechenden Messnormen sind ebenfalls in dieser Tabelle angegeben.

**Tabelle 6:**

| | EN DIN IS0 13300 | | | DIN 53214/53229 |
|---|---|---|---|---|
| Rezeptur-Nr.: | Glanz (60°) | Weißgrad | Deckkraft | Viskosität in |

| | in % | in % | in % | mPas |
|---|---|---|---|---|
| ID-M 0 10/0 | 4,8 | 89,2 | 97,9 | 16790 |
| ID-M 1 8/2 | 4,8 | 89,4 | 98 | 16840 |
| ID-M 2 6/4 | 4,7 | 89,2 | 98,1 | 16910 |
| ID-M 3 5/5 | 4,7 | 89,2 | 98,3 | 17020 |
| ID-M 4 2/8 | 4,5 | 88,6 | 98 | 17590 |
| ID-M 6 5/5 | 4,6 | 88,5 | 96,8 | 19540 |
| ID-M 7 5/5 | 4,6 | 88,7 | 97 | 20010 |
| ID-M 8 5/5 | 4,5 | 88,8 | 97,2 | 21450 |
| ID-M 9 5/5 | 4,6 | 88,5 | 96,9 | 19490 |
| ID-M 10 5/5 | 4,5 | 88,6 | 96,5 | 21030 |

Generell kann das Weißpigmentkomposit nach der Erfindung in Farben, Lacken, Kunststoffen, Dekorpapieren, usw. eingesetzt werden.

Abschließend sei ausdrücklich darauf hingewiesen, dass in sämtlichen Beispielen die Teilchen des Weißpigmentkomposits vor deren Gebrauch miteinander verbunden worden sind. Die Ausbildung der physisorptiven Verbindung erfolgt also nicht während des Einsatzes bzw. der Verwendung bzw. der Einbringung des Weißpigmentkomposits in eine Formulierung.

Die Ausführungsbeispiele zeigen lediglich mögliche Ausführungsvarianten der Einsatzmöglichkeiten des Weißpigmentkomposits.

## Patentansprüche

1. Verfahren zur Herstellung eines auf Titandioxidteilchen basierenden Weißpigmentkomposits wonach dem Titandioxid Talkum als Pigmentersatzstoffteilchen zugesetzt werden und die Titandioxidteilchen mit den Pigmentersatzstoffteilchen in einer Mühle miteinander verbunden werden, wobei als Mühle eine Scheibenschwingmühle oder eine Trommelmühle oder eine Rohrschwingmühle oder eine Planetenmühle oder eine Prallmühle oder eine Kugelmühle verwendet wird, **dadurch gekennzeichnet, dass** die Titandioxidteilchen und die Pigmentersatzstoffteilchen vor der physisorptiven Verbindung miteinander in einem gesonderten Verfahrensschritt auf eine Teilchengröße zerkleinert werden, die um maximal 10 % größer ist, als die jeweilige endgültige Teilchengröße nach der physisorptiven Verbindung beträgt und danach die Titandioxidteilchen mit den Pigmentersatzstoffteilchen physisorptiv und dauerhaft durch mechanische Befestigung der Titandioxidteilchen mit den Pigmentersatzstoffteilchen verbunden werden, wobei die physisorptive Verbindung des Titandioxids mit dem Pigmentersatzstoff durch Einpressen und/oder Einwalzen und/oder Eindrücken der Teilchen des Titandioxids in die Teilchen des Pigmentersatzstoffes hergestellt wird und dazu Titandioxidteilchen eingesetzt werden, die kleiner sind als die Pigmentersatzstoffteilchen, und für das Einpressen, Eindrücken bzw. Einwalzen der Teilchen des Titandioxids in die Teilchen des Pigmentersatzstoffes eine Mühle mit einer Beanspruchungsgeschwindigkeit der Teilchen von maximal 10 m/s betrieben wird.

2. Verfahren nach Anspruch 1, **dadurch gekennzeichnet, dass** die physisorptive Verbindung trocken durchgeführt wird.

3. Weißpigmentkomposit umfassend Titandioxidteilchen als Pigment und Talkum als Pigmentersatzstoffteilchen, **dadurch gekennzeichnet, dass** die Titandioxidteilchen mit den Pigmentersatzstoffteilchen physisorptiv durch mechanische Befestigung durch Einpressen und/oder Einwalzen und/oder Eindrücken der Titandioxidteilchen mit den Pigmentersatzstoffteilchen verbunden sind, wobei die Titandioxidteilchen kleiner sind als die Pigmentersatzstoffteilchen.

4. Weißpigmentkomposit nach Anspruch 3, **dadurch gekennzeichnet, dass** der Anteil des Talkums, bezogen auf die Gesamtmasse des Weißpigmentkomposits, ausgewählt ist aus einem Bereich mit einer unteren Grenze von 0,5 Gew.-% und einer oberen Grenze von 50 Gew.-%.

5. Weißpigmentkomposit nach Anspruch 3 oder 4, **dadurch gekennzeichnet, dass** die Teilchengröße der Titandioxidteilchen maximal 20 % der Teilchengröße der Pigmentersatzstoffteilchen beträgt.

6. Weißpigmentkomposit nach einem der Ansprüche 3 bis 5, **dadurch gekennzeichnet, dass** die Pigmentersatzstoffteilchen eine Teilchengröße von maximal 25 µm aufweisen.

## Claims

1. A method of producing a white pigment composite based on titanium dioxide particles according to which talcum is added to the titanium dioxide as pigment substitute particles and the titanium dioxide particles and the pigment substitute particles are connected to one another in a mill, wherein a vibratory disc mill or a drum mill or a vibration tube mill or a planetary mill or an impact mill or a ball mill is used as the mill, **characterized in that** the titanium dioxide particles and the pigment substitute particles are crushed before the physisorptive connection to one another in a separate process step to a particle size that is no more than 10 % greater than the final particle size in each case following the physisorptive connection and thereafter the titanium dioxide particles are connected to the pigment substitute particles physisorptively and permanently by mechanical attachment of the titanium dioxide particles to the pigment substitute particles, wherein the physisorptive connection of the titanium dioxide to the pigment substitute is made by pressing and/or rolling and/or pushing the particles of the titanium dioxide into the particles of the pigment substitute and titanium dioxide particles are used for this which are smaller than the pigment substitute particles and for the pressing-in, pushing-in or rolling-in of the particles of the titanium dioxide into the particles of the pigment substitute a mill is operated at a particle stressing rate of maximum 10 m/s.

2. The method according to claim 1, **characterized in that** the physisorptive connection is carried out dry.

3. A white pigment composite comprising titanium dioxide particles as the pigment and talcum as the pigment substitute particles, **characterized in that** the titanium dioxide particles are connected to the pigment substitute particles physisorptively through mechanical attachment by pressing in and/or rolling in and/or pressing in the titanium dioxide particles with the pigment substitute particles, wherein the titanium dioxide particles are smaller than the pigment substitute particles.

4. The white pigment composite according to claim 3, **characterized in that** the proportion of talcum relative to the total mass of the white pigment composite is selected from a range with a lower limit of 0.5 % by wt. and an upper limit of 50 % by wt.

5. The white pigment composite according to claim 3 or 4, **characterized in that** the particle size of the titanium dioxide particles is maximum 20 % of the particle size of the pigment substitute particles.

6. The white pigment composite according to one of claims 3 to 5, **characterized in that** the pigment substitute particles have a particle size of maximum 25 µm.

## Revendications

1. Procédé de fabrication d'un composite à pigment blanc basé sur des particules de dioxyde de titane, selon lequel du talc, comme particules de matière de substitution de pigment, est ajouté au dioxyde de titane et les particules de dioxyde de titane sont liées aux particules de matière de substitution de pigment dans un broyeur, comme broyeur étant utilisé un vibro-broyeur à disque ou un broyeur à tambour ou un broyeur à tubes de concassage ou un broyeur à planétaire ou un broyeur à impact ou un broyeur à billes, **caractérisé en ce que** les particules de dioxyde de titane et les particules de matière de substitution de pigment sont réduites ensemble, dans une étape séparée, avant la liaison physisorptive, à une granulométrie que est au maximum de 10% supérieure à la granulométrie finale après la liaison physisorptive, et **en ce que** les particules de dioxyde de titane sont liées ensuite aux particules de matière de substitution de pigment de manière physisorptive et permanente par fixation mécanique des particules de dioxyde de titane à la matière de substitution de pigment, la liaison physisorptive du dioxyde de titane avec la matière de substitution de pigment étant obtenue par pression et/ou par calandrage et/ou par impression des particules du dioxyde de titane dans les particules de la matière de substitution de pigment, et **en ce que**, à cet effet, des particules de dioxyde de titane sont utilisées qui sont plus petites que les particules de matière de substitution de pigment, et que pour l'introduction des particules de dioxyde de titane dans les particules de la matière de substitution de pigment par pression, par impression ou par calandrage, est utilisé un broyeur ayant une vitesse de sollicitation des particules d'un maximum de 10 m/s.

2. Composite selon la revendication 1, **caractérisé en ce que** la liaison physisorptive est effectuée par voie sèche.

3. Composite à pigment blanc comprenant des particules de dioxyde de titane comme pigment et du talc comme particules de substitution, **caractérisé en ce que** les particules de dioxyde de titane sont liées ensuite aux particules de matière de substitution de pigment de manière physisorptive par fixation mécanique obtenue par pression et/ou par calandrage et/ou par impression des particules du dioxyde de titane dans les particules de la matière de substitution de pigment, les particules de dioxyde de titane étant plus petites que les particules de matière de substitution de pigment.

4. Composite selon la revendication 3, **caractérisé en ce que** la teneur en talc, par rapport à la masse totale du composite à pigment blanc, est choisie dans une plage avec une limite inférieure de 0,5 % en poids et une limite supérieure de 50 % en poids.

5. Composite selon la revendication 3 ou 4, **caractérisé en ce que** la granulométrie des particules de dioxyde de titane est au maximum de 20 % de la granulométrie des particules de matière de substitution de pigment.

6. Composite selon l'une des revendications 3 à 5, **caractérisé en ce que** les particules de matière de substitution de pigment présentent une granulométrie d'un maximum de 25 µm.
